# EUROPEAN PATENT APPLICATION

(11) **EP 1 462 712 A1**
(43) Date of publication of application: **29.09.2004**
(21) Application number: 04251737.5
(22) Date of filing: 25.03.2004
(51) Int. Cl.: F21V 8/00, G02B 6/20

(54) **Raman probe and raman spectrum measuring apparatus utilizing the same**

(30) Priority: 25.03.2003 JP 2003083318
(71) Applicant: RIKEN, Wako-shi, Saitama 351-0198 (JP); MACHIDA ENDOSCOPE CO., LTD, Bunkyo-ku, Tokyo 113-0021 (JP)
(72) Inventor: Komachi, Yuichi, Akishima-shi Tokyo 196-0024 (JP); Tashiro, Hideo, Wako-shi Saitama 351-0198 (JP); Aizawa, Katsuo, Yokohama-shi Kanagawa 236-0052 (JP)
(74) Representative: Senior, Alan Murray

(57) **Abstract**

A Raman probe that does not produce Raman scattering that interferes with measurement, and a Raman spectrum measuring apparatus utilizing the Raman probe. The Raman probe comprises a hollow wave-guide path 10 with a light-transmitting medium (core) that is evacuated or filled with a gas that does not produce Raman scattering, such as air.

## Description

### BACKGROUND OF THE INVENTION

### (1) Technical Field

The present invention relates to a Raman probe connecting an excitation light source and a Raman spectroscopy, and a Raman spectrum measuring apparatus utilizing the Raman probe.

### (2) Background Art

When measuring Raman spectra of a sample *in situ,* for example, excitation light is guided by means of a Raman probe to a measured portion of the sample, and a light signal obtained from the sample is guided via the probe to a Raman spectrograph. However, optical fibers, such as quartz fibers, that are used in the Raman probe themselves produce Raman scattered light. Raman scattering is also generated by the optical fiber on the exciting end as well as one on the receiving end. Raman scattered light from the exciting-end optical fiber is shone onto the sample together with the excitation light, and as it enters the receiving-end optical fiber, it interferes with the Raman scattering generated from the sample. Further, if the excitation light with which the sample has been irradiated is reflected or scattered by the sample and is then incident on the receiving-end optical fiber, Raman scattering is caused in the receiving-end optical fiber as a result, which would also interfere with the measuring of the Raman spectra generated from the sample.

These interfering light not only lower the S/N of the measurement signal, but could even make it impossible to perform measurement if the signal from the sample is very weak. In a method for eliminating the Raman scattered light from the optical fiber, a noise-eliminating filter is mounted on the tip of the Raman probe (see Non-patent Document 1). In this case, on the tip of the exciting-end optical fiber, a filter is mounted which blocks the Raman scattering produced inside the exciting-end optical fiber but which only transmits the excitation wavelength from the laser. On the receiving-end optical fiber, another filter is mounted which blocks the excitation-wavelength light reflected or scattered by the sample but which transmits the Raman scattered light from the sample.

[Non-patent Document 1] Applied Spectroscopy 48 (12), 1529-1531 (1994)

### SUMMARY OF THE INVENTION

The provision of a filter at the tip of a Raman probe has various problems. For one thing, because the filter is designed in accordance with the wavelength of the excitation light or the wavelength range of the Raman scattered light, the degree of freedom of measurement is limited. For example, when excitation laser light with a different wavelength is used, the Raman probe must also be fitted with a filter adapted for the particular excitation wavelength. The filters must be provided for both the exciting-end optical fiber and the receiving-end optical fiber. The filters have the problem of weatherability, and particularly if a high-intensity pulsed laser is used as the excitation light source, changes in filter characteristics over time must be monitored. Filters could generate noise. Furthermore, it is extremely difficult to prepare a filter and bond it to a micro-probe with a diameter of not more than 1 mm, for example, and therefore the size of the probe is limited.

To solve these problems, efforts are being made to improve filters. However, filter improvements are limited by the selection of the substrate and film material, for example, and there is a need for a light-guide path that does not generate Raman scattering.

In view of these problems of the prior art, it is the object of the invention to provide a Raman probe that does not cause Raman scattering, which interferes with measurement, and a Raman scattering measuring apparatus utilizing the Raman probe.

The aforementioned object of the invention is achieved by using, as a Raman probe, a hollow wave-guide path with a light-transmitting medium (core) that is evacuated or filled with a gas that does not produce Raman scattering, such as air. The internal surface of the hollow wave-guide path is mirror-finished with metal. No Raman scattering is produced by the reflection on a metal surface.

Specifically, the invention provides a Raman probe for measuring Raman spectra, comprising an exciting wave-guide path for guiding light from a light source to a sample, and a receiving wave-guide path for guiding a light signal from the sample to a detector. The exciting wave-guide path and the receiving wave-guide path are formed by hollow pipes the internal walls of which are provided with a metal reflecting surface. The metal reflecting surface may be formed by a thin film of gold, copper, platinum, aluminum or the like, as well as silver.

The ends of the hollow wave-guide may be covered with a light-transmitting window so as to sufficiently reduce the amount of Raman scattering that is produced that it does not interfere with measurement. In this case, the inside of the hollow wave-guide may be evacuated or filled with a gas other than air. The hollow wave-guide may be circular in cross section and have an internal diameter of 100 to 1000 µm, for example.

The same hollow wave-guide may be used for both the exciting wave-guide path and the receiving wave-guide path. Alternatively, the exciting wave-guide path may be formed by a single hollow pipe, and a plurality of hollow wave-guide may be arranged around the single hollow wave-guide when seen at the sample-side end of the receiving wave-guide path.

By utilizing the Raman probe of the invention in a Raman spectra measuring apparatus comprising a laser light source and a spectrograph as a means of guiding light from the light source to a sample and guiding a light signal from the sample to the spectrograph, the Raman scattering spectrum of the sample can be measured with high accuracy without being influenced by interfering light.

The Raman probe of the invention does not suffer the problem of noise generated in the optical fiber that has been conventionally used. The excitation wavelength for Raman spectroscopy can be selected as desired, and, further, ultraviolet light that cannot be easily transmitted by the conventional optical fiber can be used as excitation light. Because there is no Raman scattering or fluorescence produced by the light-transmitting medium, there is no need to provide a noise-eliminating filter at the tip of the Raman probe. Raman spectra can be measured efficiently by merely disposing a laser transmitting wave-guide path and a Raman scattering collecting wave-guide path adjacent to each other.

### BRIEF DESCRIPTION OF THE DRAWINGS

Fig. 1 schematically shows an example of a hollow wave-guide path used in the Raman probe of the invention.
Fig. 2 schematically shows another example of the cross-sectional shape of the hollow wave-guide path.
Fig. 3 schematically shows an end portion of another example of the hollow wave-guide path.
Fig. 4 shows an example of the process of preparing the hollow wave-guide path.
Fig. 5 schematically shows an example of the Raman probe of the invention.
Fig. 6 schematically shows another example of the Raman probe of the invention.
Fig. 7 schematically shows yet another example of the Raman probe of the invention.
Fig. 8 schematically shows an optical system that was used in measuring Raman scattering during the measurement of the characteristics of the Raman probe of the invention.
Fig. 9 shows examples of measurement of Raman spectra.
Fig. 10 shows other examples of measurement of Raman spectra.

### DESCRIPTION OF THE PREFERRED EMBODIMENTS OF THE INVENTION

Embodiments of the invention will be described by referring to the drawings.

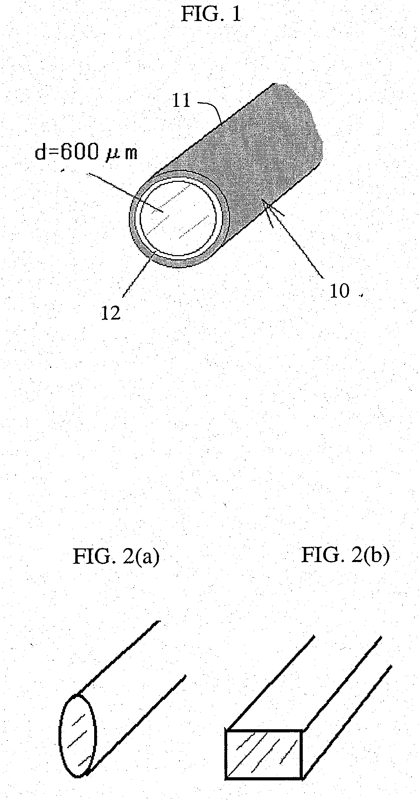

Fig. 1 schematically shows an example of a hollow wave-guide path used in the Raman probe according to the invention. The illustrated hollow wave-guide path 10 comprises a hollow pipe 11 having a mirror-finished internal surface formed by providing a metal reflecting film 12 on the entire inner wall of the pipe. The hollow pipe 11 has a circular cross section. In one example, the hollow pipe 11 was made of nickel and had a diameter of approximately 600 µm, and the metal reflecting film 12 was formed of silver, with a film thickness of approximately 200 nm. A light beam incident on one end of the hollow wave-guide path 10 is repeatedly reflected by the internal metal reflecting film 12 as it advances, until it is emitted via the other end. As both ends of the hollow wave-guide path 10 are open, the inside of the hollow wave-guide path is filled with air under normal environments in which it is used.

No Raman scattering is caused as the light beam is transmitted through air or reflected by a metal surface. Thus, this Raman probe utilizing the hollow wave-guide path does not require the filters that are necessary in the Raman probes in which conventional optical fibers are used. The hollow wave-guide path 10 can be used either as a wave-guide path for guiding the excitation light from the laser light source to a sample, or as a wave-guide path for guiding the Raman scattered light from the sample to a Raman spectrograph. Because the reflectance of the thin film of silver is not much wavelength-dependent, the above-described Raman probe can be used in a wide range of wavelengths.

Fig. 2 schematically shows another example of the cross-sectional shape of the hollow wave-guide path. The hollow wave-guide path shown in Fig. 1 has a circular cross section. However, the cross-sectional shape of the path does not need to be circular, as long as the path is capable of reflecting the light beam introduced via the incident end by the metal reflecting surface on the internal wall of the hollow pipe, and thus guiding the beam to the outgoing end. Therefore, the hollow wave-guide path may have an elliptical cross section as shown in Fig. 2(a), or a rectangular cross section as shown in Fig. 2(b). Thus, the cross-sectional shape of the hollow wave-guide path may be appropriately selected depending on the purpose of measurement, the environment in which it is used, and so on.

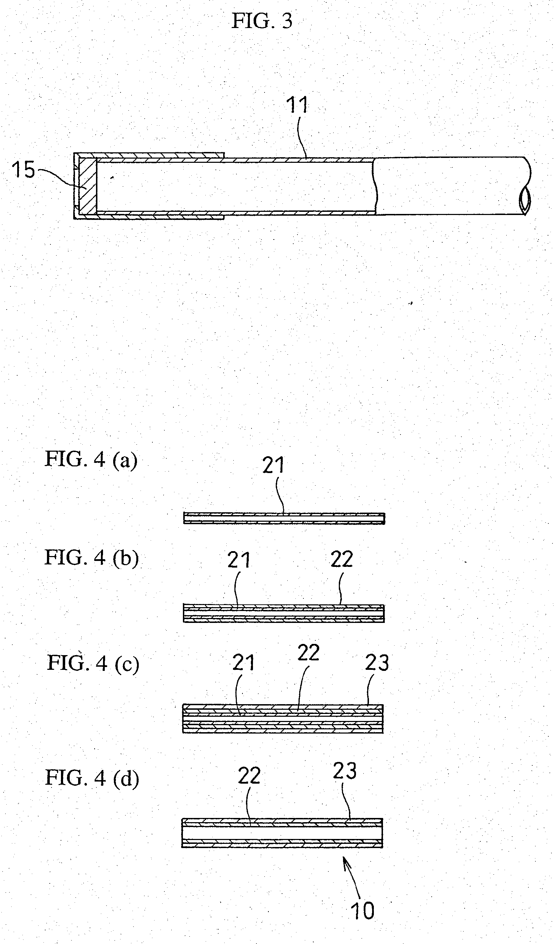

Fig. 3 schematically shows the end of another example of the hollow wave-guiding path used in the Raman probe of the invention. In this example of the hollow wave-guide path, the excitation-light outgoing end (towards the sample) or both the excitation-light incident and outgoing ends of the hollow pipe 11 are covered with a light-transmitting window 15 made of a light-transmitting material with little Raman scattering, such as quartz glass.

By employing such a hollow wave-guide path, the end(s) of which are covered with the light-transmitting window 15, gasses or liquids in the measurement environment can be prevented from penetrating and attaching to the inside of the hollow wave-guide path or contaminating the metal reflecting surface on the inner wall of the hollow wave-guide path. The inside of the hollow wave-guide path may also be either evacuated or filled with a gas that does not cause Raman scattering, such as argon, and both ends of the pipe may be sealed with the light-transmitting windows 15, which do not cause Raman scattering. By so doing, the absorption of laser light or the interference of a light signal by water vapor in the air, for example, can be prevented.

Fig. 4 shows an example of the process of manufacturing the hollow wave-guide path of the invention. Initially, a pipe 21 is prepared using an acid-dissolved glass (glass that can be dissolved by an acidic liquid), as shown in Fig. 4(a). The external diameter of the pipe 21 is approximately 100 to 600 µm. Then, silver is deposited on the external surface of the pipe, as a base material, by vacuum evaporation, thus forming a metal reflecting film 22, as shown in Fig. 4(b). The film thickness of the metal reflecting film 22 is approximately 2,000 angstroms. Then, the film is plated with nickel 23 to a wall thickness of 50 to 100 µm as shown in Fig. 4(c), in order to increase the film strength. Finally, an acidic liquid is caused to flow in the pipe 21 to thereby melt the base material, namely the glass pipe 21, as shown in Fig. 4(d). As a result, a hollow wave-guide path 10 can be obtained, in which the internal surface is mirror-finished.

In the following, a Raman probe utilizing the hollow wave-guide path of the invention will be described.

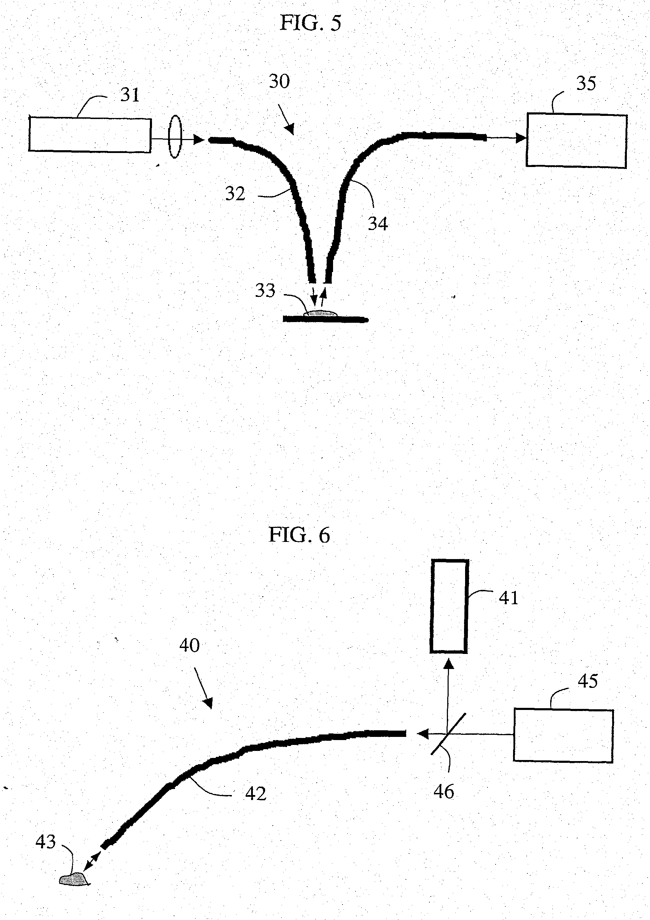

Fig. 5 shows an example of the Raman probe of the invention. In this example, the Raman probe 30 includes one hollow wave-guide path each for excitation and reception. Excitation light emitted by a laser light source 31 is passed through an exciting-end hollow wave-guide path 32 and shone onto a sample 33. Raman scattering from the sample 33 is guided to a Raman spectrograph 35 via a receiving wave-guide path 34.

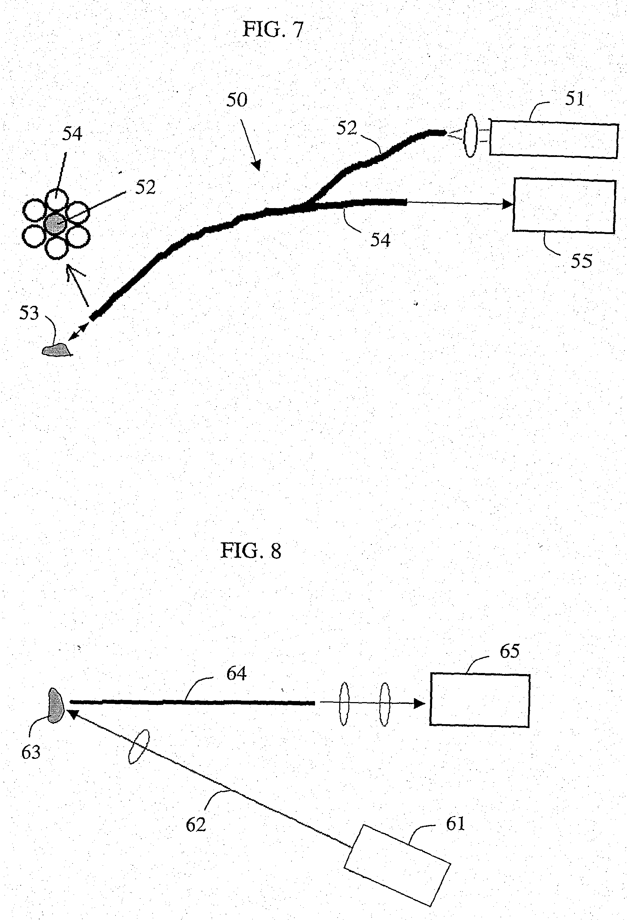

Fig. 6 schematically shows another example of the Raman probe of the invention. In this example, an excitation/reception integrated-type Raman probe 40 comprises a sole hollow wave-guide path 42 that serves both as an exciting wave-guide path and a receiving wave-guide path. A laser light source 41 and a Raman spectrograph 45 are disposed on one end of the hollow wave-guide path 42, while a sample 43 is disposed on the other end. Excitation light from the laser light source 41 is reflected by a half mirror 46 and is then incident on the hollow wave-guide path 42, before it is shone onto the sample 43. Raman scattering from the sample 43 is again incident on the same hollow wave-guide path 42, transmitted by the half mirror 46, and then guided to the Raman spectrograph 45. The excitation light and the received Raman scattered light are separated by the half mirror 46. While the half mirror may be replaced by an edge filter, the half mirror has the advantage that it is not limited by the wavelength used.

In Raman probes utilizing quartz fibers, a sole light guiding path cannot be used for both excitation and reception purposes because each end requires a different filter. On the other hand, the hollow wave-guide path is not fitted with filters, so that the Raman probe can be formed by a sole hollow wave-guide path.

Fig. 7 schematically shows yet another example of the Raman probe of the invention. In this example, a Raman probe 50 is made up of a plurality of hollow wave-guide paths bundled together. A sole hollow wave-guide path 52 disposed at the center is an exciting wave-guide path for guiding excitation light from a laser light source 51 to a sample 53. A plurality of hollow wave-guide paths 54 are arranged around the hollow wave-guide path 52, and they form the receiving wave-guide path for guiding the Raman scattering from the sample 53 to a Raman spectrograph 55. In the Raman probe 50, the light-receiving solid angle for the Raman scattered light from the sample 53 can be increased, so that the signal intensity can be increased. While the illustrated receiving wave-guide path comprises six hollow wave-guide paths 54, this is only an example and the number of the hollow wave-guide paths may be other than six. Further, on the outgoing end of the receiving wave-guide path, the plural hollow wave-guide paths may be arranged in a straight line in conformity with the shape of the incident slit of the Raman spectrograph 55.

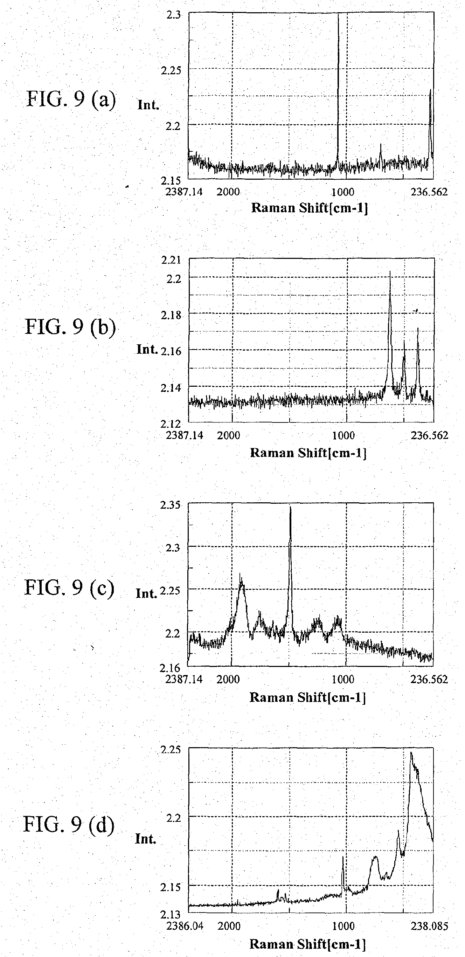

The characteristics of the Raman probe utilizing the hollow wave-guide paths of the invention were examined. Fig. 8 schematically shows the optical system used for the measurement of Raman scattering. A sample 63 was directly irradiated with laser light 62. The receiving wave-guide path comprised a hollow wave-guide path 64. A light signal from the sample 53 was guided through the hollow wave-guide path 64 to a Raman spectrograph 65. The hollow wave-guide path 64 was made of nickel with an internal diameter of approximately 600 µm and a length of approximately 700 mm, with the internal surface provided with a reflecting film of silver. A laser light source 61 comprised a He-Ne laser or a titan-sapphire laser. As the sample, calcium carbonate, titanium dioxide and magnesium oxide were used. The Raman scattering spectra of these samples were measured, the results of which are shown in Fig. 9.

Fig. 9(a) shows the Raman spectrum of calcium carbonate that was measured. The excitation light was a He-Ne laser (wavelength 633 nm). Fig. 9(b) shows the Raman spectrum of titanium dioxide that was measured using a He-Ne laser (wavelength 633 nm) as excitation light. Fig. 9(c) shows the Raman spectrum of magnesium oxide that was measured using a He-Ne laser (wavelength 633 nm) as excitation light. For comparison, the result of measurement of a quartz fiber instead of the hollow wave-guide path as the receiving wave-guide path is shown in Fig. 9(d). The sample was calcium carbonate, and its Raman spectrum was measured using a He-Ne laser (wavelength 633 nm) as the excitation light source.

As will be seen from Fig. 9(d), in the measurement using the quartz fiber, the Raman scattering of the quartz fiber is superposed on the spectrum, resulting in a poor S/N. On the other hand, in the measurement using the Raman probe of the invention, there is no interfering spectrum from the wave-guide path so that the Raman spectrum of each sample was measured with high sensitivity, as shown in Fig. 9(a) to (c).

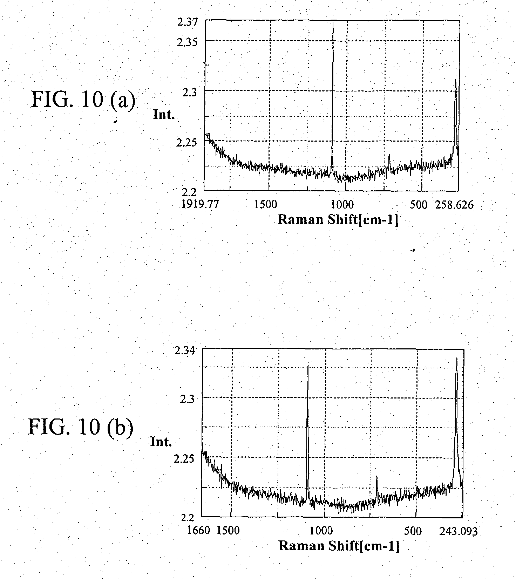

Fig. 10 shows an example of measurement of another sample using the Raman probe of the invention. Fig. 10(a) shows the Raman spectrum of calcium carbonate that was measured with the Raman probe of the invention. The excitation light source comprised a titan-sapphire laser, and the excitation wavelength was 720 nm. Fig. 10(b) shows the Raman spectrum of calcium carbonate measured with the Raman probe of the invention, in which the excitation light source was a titan-sapphire laser and the excitation wavelength was 780 nm. As will be seen from the charts, the Raman spectra were measured with high S/N ratios even when the excitation wavelength was varied.

Thus, the Raman probe of the invention does not cause interfering light in the wave-guide path, such as Raman scattering or fluorescence, such that Raman spectrum can be measured with a high S/N ratio. As there is no generation of Raman scattering, as happens in a quartz fiber wave-guide path, there is no need to employ any filters. Use of a filter would limit the measurement to the wavelengths that are matched with the wavelength characteristics of the filer. In accordance with the present invention, however, the Raman probe does not employ any filters, so that the measurement of Raman spectrum with varying wavelengths can be performed by a single Raman probe.

In accordance with the invention, a Raman probe can be obtained that does not cause Raman scattering, which interferes with measurement. By utilizing the Raman probe, a highly sensitive Raman spectrum measuring apparatus can be provided.

## Claims

1. A Raman probe for measuring Raman spectrum, comprising:
an exciting wave-guide path for guiding light from a light source to a sample; and
a receiving wave-guide path for guiding a light signal from said sample to a detector, wherein:
said exciting wave-guide path and said receiving wave-guide path comprise hollow pipes with their internal walls formed with a metal reflecting surface.

2. The Raman probe according to claim 1, wherein said metal reflecting surface is formed by a thin film of silver, gold, copper, platinum or aluminum.

3. The Raman probe according to claim 1 or 2, wherein said hollow pipes have their ends covered with a light-transmitting window having little Raman scattering.

4. The Raman probe according to claim 1,2 or 3, wherein the inside of said hollow pipes are evacuated or filled with a gas other than air.

5. The Raman probe according to any one of claims 1 to 4, wherein said hollow pipes are circular in cross section and have an internal diameter of 100 to 1000 µm.

6. The Raman probe according to any one of claims 1 to 5, wherein the same hollow wave-guide is used for both the exciting wave-guide path and the receiving wave-guide path .

7. The Raman probe according to any one of claims 1 to 5, wherein said exciting wave-guide path is made of a single hollow wave-guide, and said receiving wave-guide path is made of a plurality of hollow pipes arranged around said single hollow wave-guide when seen at a sample-side end of said receiving wave-guide path .

8. A Raman spectrum measuring apparatus comprising:
a laser light source;
a spectrograph; and
a Raman probe for guiding light from said laser light source to a sample and guiding Raman scattering light from said sample to said spectrograph, wherein said Raman probe is one according to any one of claims 1 to 7.
